# EUROPEAN PATENT APPLICATION

(11) **EP 4 764 205 A1**
(43) Date of publication of application: **24.06.2026**
(21) Application number: 24222029.1
(22) Date of filing: 20.12.2024
(51) Int. Cl.: F03D 7/02

(54) **DAMPING OF BLADE VIBRATIONS**

(71) Applicant: Siemens Gamesa Renewable Energy A/S, 7330 Brande (DK)
(72) Inventor: Simeonov, Orlin Borisov, 7100 Vejle (DK); Freire, Nuno Miguel Amaral, 3150-109 Condeixa (PT); Duboc, Bastien, 76100 Rouen (FR)
(74) Representative: SGRE-Association

(57) **Abstract**

It is described a method of damping a vibration (15) of one or more rotor blades (5) of a wind turbine (1), the rotor blades being coupled to a rotor (3a) of a wind turbine generator (3), during an operation mode different from a power production mode, the vibration in particular including an edgewise vibration (14) out of a rotor plane (15), the method comprising: monitoring a characteristic (17), in particular including magnitude and/or phase and/or frequency, of the vibration (14); determining a torque reference (21, Tref) based on the characteristic of the vibration which is suitable for damping the vibration; generating a torque by the generator (3) according to the torque reference (21, Tref).

## Description

### Field of invention

The present invention relates to a method and to a corresponding arrangement of damping a vibration of the rotor blades of a wind turbine during an operation mode different from a power production mode, wherein the vibration in particular includes an edgewise vibration out of a rotor plane. Furthermore, the present invention relates to a wind turbine comprising the arrangement. The present invention in particular relates to damping of stall- and/or vortex-induced vibrations (SIV/VIV) of wind turbine blades.

### Art Background

Vibrations, in particular stall- and vortex-induced vibrations of rotor blades, may represent an important contributor for fatigue damage in particular of very large wind turbine blades which are deployed offshore. Those vibrations may exceed allowable levels when the wind turbine does not produce power, for instance during idling or blade installations or when the wind turbine is stopped with a partially or fully installed rotor. For example, vibrations of different edgewise rotor modes (first order or second order edgewise asymmetric tilt/yaw and symmetric modes of the rotor blades) have been observed.

Vibrations of a wind turbine blade may in particular interfere with or disturb a method of mounting a blade that makes use of the wind turbine's electrical drive train (generator and power converter) for positioning a balanced or an unbalanced rotor (depending on the number of installed blades). When at least one blade is installed at the hub wind turbine, rotor blade vibrations, in particular edgewise vibrations, may occur and may disturb the mounting procedure. The document EP 3 887 673 B1 addresses the build-up of vortex-induced vibrations and proposes a pitch and yaw control for damping. However, during service operations (maintenance etc.), commissioning operations or failure modes (for example communication loss, etc.) neither yaw nor pitch control may be possible or allowed.

Thus, there may be a need for a method and a corresponding arrangement of damping a vibration of the rotor blades of a wind turbine which is capable for effective damping in an operational mode different from a power production mode, such idle mode or such as maintenance operation, service operation, commissioning operation or failure modes, for example.

### Summary of the Invention

This need may be met by the subject matter according to the independent claims. Advantageous embodiments of the present invention are described by the dependent claims.

Embodiments of the present invention provide methods and arrangement to reduce or minimize fatigue and extreme loads in wind turbine components caused in particular by vortex-induced vibrations, namely in wind turbine blades. Embodiments of the present invention provide a method and a corresponding arrangement that reduces or minimizes in particular vortex-induced vibrations by means of a damping torque generated by the electrical drive train. This may include to monitor the vibrations, and/or generating a torque demand and/or controlling a permanent magnet (PM) generator at very low speed (including standstill) to deliver the demanded torque.

The methodology may be adapted to dampen one or more rotor blade vibration modes such as edgewise modes, in particular first order and second order edgewise asymmetric tilt/yaw and symmetric modes. The control methods may also affect or dampen flapwise blade modes or flapwise rotor modes due to the coupling between different vibrational modes due to constructional design.

According to an embodiment of the present invention it is provided a method of damping a vibration of the rotor blades of a wind turbine, the rotor blades being coupled to a wind turbine generator, during an operation mode different from a power production mode, the vibration in particular including an edgewise vibration out of a rotor plane, the method comprising: monitoring a characteristic, in particular including magnitude and/or phase and/or frequency, of the vibration; determining a torque reference based on the characteristic of the vibration which is suitable for damping the vibration; generating a torque by the generator according to the torque reference.

The method may be implemented in software and/or hardware or may be performed for example by a wind turbine controller. The vibration of the rotor blades may in particular be in the edgewise direction, i.e., a vibration (back and forth movement, or reciprocating movement) in the chordwise direction of the rotor blades. When the rotor experiences a complex vibration including different vibrational modes into different directions, the method may still be applicable and may be adapted to at least dampen the edgewise vibration components.

The vibration of the rotor blades may be a superposition of one or more vibrational modes along different directions including edgewise vibration modes and/or flapwise vibration modes. Plural different vibration modes may be damped by the method by superposition of individual torque references which are each designed or derived to dampen a particular vibration mode. The superimposed torque reference (for example a sum signal of individual torque references) may then be supplied to the generator for generating a corresponding summed torque for damping the plural different vibration modes, for example.

In other embodiments, the method may in particular be adapted to damp (e.g. reduce the amplitude of) a particular vibration mode, for example a particular edgewise vibration mode having a particular, for example predetermined, frequency or frequency range.

The generator may comprise a permanent magnet synchronous generator. During performing the method, the generator may not produce electrical energy, e.g. may be idling. The rotor may substantially stand still or may rotate only with a very slow rotational speed, such as below 0.01 rpm.

The rotor plane, out of which the edgewise vibration occurs, may be a plane perpendicular to a rotation axis of a rotor or hub of the generator.

Monitoring the characteristic may include to measure the characteristic using one or more sensors installed at the rotor blades and/or at the drive train and/or a nacelle, for example. At least a signal indicating the magnitude or amplitude of the vibration may be utilized as the characteristic of the vibration. For example, to a measurement signal for example of a strain gauge sensor, particular frequency filter(s) (e.g. band-pass and/or lowpass filter) may be applied to obtain information of an amplitude of a vibration of a particular considered frequency.

The torque reference may represent a torque to be generated by the generator in order to dampen the vibration. The torque reference may for example also be represented as a current reference being in essence equivalent to the torque reference. Thus, also (alternatively or additionally) a current reference may be determined based on the characteristic of the vibration.

The generator may then be controlled in order to generate the torque according to the torque reference. Thereby, the generator may in particular be connected to a generator-side converter, as will be explained below. Thereby, vibrations of the rotor blades may effectively be damped, i.e., reduced in its amplitude such as to reduce fatigue load or fatigue damage.

According to an embodiment of the present invention, the determining a torque reference and/or generating the torque is performed only if the magnitude of the vibration, in particular for at least one predetermined frequency, is above a vibration magnitude threshold.

The magnitude of the vibration may for example correspond to the amplitude or the strength of the vibration. If the magnitude of the vibration is above the vibration magnitude threshold, the vibration may be damaging the rotor blades or may increase fatigue load of the rotor blades. Thus, damping or reducing the magnitude of the vibration by applying the damping method may improve or prolong the lifetime of the rotor blades or other components of the wind turbine. Further, if the method is only applied or the torque is generated only if the magnitude of the vibration is above the vibration magnitude threshold, other control procedures, for example maintenance procedures and/or installation procedures, may not be interfered with.

According to an embodiment of the present invention, the generator is electrically connected to a generator-side converter, in particular AC/DC converter, including plural controllable switches, for controlling the generator, the method comprising: if the magnitude of the vibration is above the vibration magnitude threshold: in particular starting the generator-side converter; deriving an operational parameter reference, in particular voltage and/or current reference, which is based on the torque reference and in particular an actual torque indicating feedback; receiving, by the generator-side converter, the operational parameter reference, in particular voltage reference; operating, by the generator-side converter, the controllable switches based on the operational parameter reference.

The generator-side converter may comprise plural controllable switches, for example power transistors, which may be controlled by supplying respective gate signals for controlled opening and closing of the controllable switches. Thereby, the generator-side converter may be capable of converting a variable frequency AC power stream to a substantially direct current (DC) power stream.

The generator-side converter may be connected to the generator to receive the AC power stream during power production mode. During the damping method, the generator may be operated in a motor mode in order to generate the torque according to the torque reference. For controlling the generator in this embodiment, the generator is controlled via the generator-side converter.

In the case that the generator-side converter has previously been stopped, the generator-side converter may be started if the magnitude of the vibration is above the vibration magnitude threshold. The operational parameter reference may be derived using one or more control curves or reference curves which define relationships between the torque reference and the respective operational parameter reference. The operational parameter reference may for example be derived by a control module receiving for example an error between the torque reference and an actual torque indicating feedback. Such control module may include a proportional term and/or an integral term and/or an differential term. The particular control module may be especially adapted for the frequency of the rotor blade vibration to be damped.

When plural vibration modes are to be damped, a controller may include for each vibration mode a respective especially adapted control module which may then derive an individual operational parameter reference which is suitable for controlling the particular individual vibration mode. The individual operational parameter references may then be combined, in particular summed, in order to derive a combined operational parameter reference that may then be supplied to the generator-side converter in order to damp plural individual vibration modes of the rotor blades. Furthermore, for example, a gate driver module may be employed for converting the operational parameter reference to individual switch signals of the plural controllable switches. Thereby, an effective control may be achieved using conventionally available components.

According to an embodiment of the present invention, the method further comprises in particular as an inner loop: monitoring actual currents of generator windings of the generator; determining a current reference, in particular in a d-q frame, based on the torque reference and in particular a rotor position; supplying the monitored actual currents, in particular converted to the d-q frame, and the current reference to a current controller, in particular in including a proportional and/or integral and/or differential term; deriving, by the current controller, an operational parameter reference, in particular in an abc-frame, in particular voltage reference; supplying the operational parameter reference to the generator-side converter.

The actual currents may be obtained by respective measurement sensors (at stator windings) and may result in actual currents in the fixed abc-frame. The current reference may in particular be derived or determined in the d-q-frame being a coordinate frame rotating synchronously with the rotor. Therefore, transformations between the abc-frame and the d-q-frame may be required which require the knowledge of the rotor position. The rotor position may be measured or estimated depending on the application. The rotor position may in particular be determined without using a sensor by applying high frequency signal injection and deriving the rotor position from the electrical quantities, such as current and/or voltage of the generator windings. The current controller may derive the operational parameter reference such that the difference between the current reference and the monitored actual current diminishes and ideally becomes zero. Thereby, an effective damping may be achieved.

The control method may include an outer loop and an inner loop. The outer loop may involve to receive a feedback regarding the rotor blade vibration. The inner loop may be integrated into the outer loop and may involve to receive a torque indicating feedback, for example including a current feedback (from which the actual torque may be derivable). The rotor position may be derived sensorless by a high frequency signal injection method as is known in the art. The high frequency injection method or the sensorless rotor position determination may in particular be advantageous during very low rotation speed or even stand still.

According to an embodiment of the present invention, the method further comprises in particular as an outer loop: receiving, by a vibration controller, the characteristic of the vibration, in particular a magnitude of the vibration in a predetermined frequency range; deriving, by the vibration controller, the torque reference, in particular including amplitude and/or frequency and/or phase.

The torque reference may be derived such as to dampen the vibration. For example, the torque reference may have substantially the same frequency as the vibration to be damped but may have a phase which differs from the phase of the vibration in order to counteract the vibration. Thereby, effective reduction of the amplitude of the vibration may be achieved.

According to an embodiment of the present invention, the characteristic of the vibration is monitored using measurement data from at least one blade strain gauge sensor and/or load sensor and/or accelerometer installed at the blade and/or at the generator and/or drive train and/or at a nacelle.

Thereby, conventionally available sensor components of conventional wind turbines may be deployed or employed thereby simplifying the complexity of the method.

According to an embodiment of the present invention, the operation mode includes that the rotor is idling and/or locked and/or a brake is applied to the rotor and/or that a rotational speed of the rotor is less than a number in the range between 0.01 and 0.1 rpm and/or that a rotor blade mounting or unmounting procedure is performed.

The rotor may be idling in the sense that the wind turbine is yawed and pitched such that the impacting wind substantially does not cause (or selden causes) high speed of rotation of the rotor. Some idle modes may have also high rotor speed.

The rotor may for example be locked by inserting locking pins in locking pin openings provided at the rotor and a stator portion of the wind turbine. Although locked, slight rotor movement may be possible due to slight clearances between locking pins and locking holes. Thus, still it may be possible to exert a torque to the rotor by operating the generator in the motor mode for damping the vibration(s). Further, even if the brake is applied for braking the rotor, slight movement of the rotor may still be possible since the brake not necessarily completely fixes the rotor relative to a stator portion. Thus, the method may be applicable or applied in different operation modes or conditions or states which do not include a power production mode.

According to an embodiment of the present invention, the method further comprises if the magnitude of the vibration is at or below the vibration magnitude threshold and/or the torque reference is below a torque threshold: stopping the generator-side converter.

Stopping the generator-side converter may involve to deenergize the generator-side converter in particular disconnecting it from any energy supply or power supply. The generator may then be without any control and may freely be idling. However, the generator may be secured, for example by applying locking pins or locking equipment for locking the rotor relative to a stator portion for applying a rotor brake.

According to an embodiment of the present invention, the generator-side converter is connected to a DC-link which is connected to a grid-side converter, the method comprising: keeping the grid side converter turned off.

The grid-side converter may be turned off during the entire damping method. In other embodiments, the grid-side converter may be turned on in order for example to receive electrical energy from a utility grid for performing for example the control method or keep other essential components be running.

According to an embodiment of the present invention, at least one of the following is satisfied: the blade is pitched to substantially 90° or a feather position or a stop position or an idling position; the vibration is at least vortex induced; the vibration includes one or more edgewise rotor vibration modes, in particular having frequency between 0.1 Hz and 5 Hz.

Thereby, typical non-power production modes of operation may be supported.

According to an embodiment of the present invention, the generator is or comprises a permanent magnet synchronous generator, in particular having an outer rotor. The outer rotor may be coupled to a hub at which one or more rotor blades may be mountable or may be mounted.

It should be understood, that features, individually or in any combination, disclosed, described, explained or provided for a method of damping a vibration of the rotor blades of a wind turbine may also be applied or provided, individually or in any combination, to an arrangement for damping a vibration of the rotor blades of a wind turbine, according to embodiments of the present invention and vice versa.

According to an embodiment of the present invention it is provided an arrangement for damping a vibration of the rotor blades of a wind turbine, the rotor blades being coupled to a wind turbine generator, during an operation mode different from a power production mode, the vibration in particular including an edgewise vibration out of a rotor plane, the arrangement comprising: an input port for receiving a signal indicating a characteristic, in particular including magnitude and/or phase and/or frequency, of the vibration; a processor adapted to determine a torque reference based on the characteristic of the vibration which is suitable for damping the vibration; an output port for control of the generator based on the torque reference.

The arrangement may be implemented in software and/or hardware and may for example be a portion of a wind turbine controller.

According to an embodiment of the present invention, the arrangement is adapted to carry out or control a method of damping a vibration according to one of the above-described embodiments.

According to an embodiment it is provided a wind turbine, including: an arrangement according to any one of the embodiments described above; a generator for generating a torque according to the torque reference; at least a generator-side converter electrically connected to the generator, the arrangement being connected to control the generator-side converter; at least one rotor blade coupled to the generator.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawings

Embodiments of the present invention are now described with reference to the accompanying drawings. The invention is not restricted to the illustrated or described embodiments.
Fig. 1 schematically illustrates a wind turbine according to an embodiment of the present invention including an arrangement according to an embodiment of the present invention;
Fig. 2 illustrates a flow-chart of a method according to an embodiment of the present invention;
Figs. 3A, B, C illustrate graphs showing physical quantities during performing methods according to embodiments of the present invention;
Figs. 4A, B, C illustrate results of Fourier transformations of the data shown in Figs. 3A, B, C.

### Detailed Description

The illustration in the drawings is in schematic form.

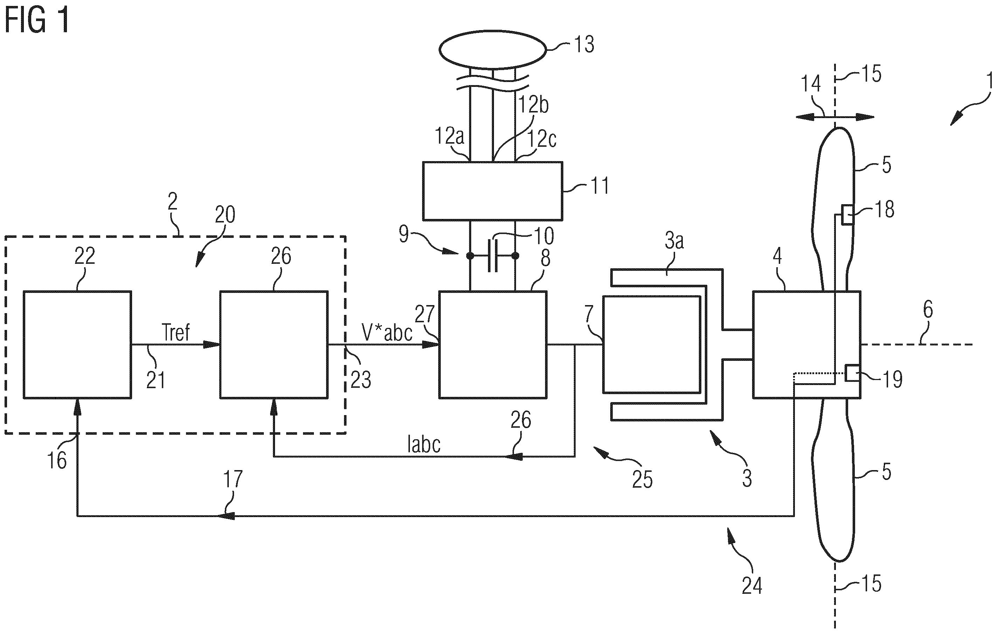

The wind turbine 1 schematically illustrated in Fig. 1 according to an embodiment of the present invention includes an arrangement 2 for damping a vibration of the rotor blades of the wind turbine 1 according to an embodiment of the present invention which will be explained in more detail below.

The wind turbine 1 further comprises a generator 3 having rotor 3a which is coupled to a hub 4 at which plural rotor blades 5 may be mountable or mounted. During a power production mode, the generator 3 produces electrical energy upon rotation of the hub 4 about a rotation axis 6. The generator 3 comprises rotor 3a, in particular permanent magnet rotor, which is coupled to the hub 4. Furthermore, the generator 3 comprises not in detail illustrated stator with stator windings, in particular multiple phase stator windings, which provide at an output terminal 7 for example three-phase AC power.

The wind turbine 1 further comprises a generator-side converter 8 which is electrically connected to the generator 3 in order to receive the three-phase AC power stream from the generator 3 during a power production mode when the hub 4 is rotating. At the hub 4, zero, one or more rotor blades 5 may be mounted or are mounted.

In the illustrated embodiment, the wind turbine 1 further comprises a DC link 9 which is coupled to output terminals of the generator-side converter which substantially outputs a DC voltage. The DC link comprises a capacitor 10.

The wind turbine 1 further comprises a grid-side converter 11, in particular configured as a DC/AC converter which provides at output terminals a substantially fixed frequency power stream the output terminals indicated with reference signs 12a,b,c. During normal operation or power production operation, the wind turbine 1 is connected to a utility grid 13 to which electrical energy is provided.

The arrangement 2 included in the wind turbine 1 is adapted to carry out or control a method of damping a vibration of the rotor blades 5 of the wind turbine 1 according to an embodiment of the present invention, during an operation mode different from a power production mode, wherein the vibration 14 of the rotor blades 5 (here illustrated pitched to 90° or feather position such that e.g. a leading edge points towards the wind) includes an edgewise vibration out of a rotor plane 15. The rotor plane 15 is perpendicular to the rotation axis 6. The vibration 14 of the rotor blades 5 includes a reciprocating movement of the blade out of the rotor plane 15. During performing the method, the rotor blades may be pitched in a stop position or a feathered position being characterized by a pitch angle for example of substantially 90°. For example, in this situation at rotor stand still, a chord line of the rotor blades 5 lies in the drawing plane of Fig. 1. Upon rotation of the rotor, the chord plane remains perpendicular to the rotor plane 15 and intersects the rotation axis 6.

The arrangement 2 comprises an input port 16 for receiving a signal 17 indicating a characteristic in particular including magnitude and/or phase and/or frequency of the vibration 14. In the illustrated embodiment, the wind turbine 5 comprises a strain gauge sensor 18 in order to measure a deformation of the rotor blades, this deformation being represented by the feedback signal 17 for example. In other embodiments, there may be installed an accelerometer 19 at the hub or at any other position of a not indicated nacelle or a drive train or the generator, the hub and potentially other components of the wind turbine. The sensor 18 may also be configured as a load sensor. The sensor 18 may be installed at any position of the rotor blades, for example also at a position closer to a root section of the rotor blades or to the tip section of the rotor blades.

The arrangement 2 further comprises a processor 20 (which may comprise one or more components or modules) adapted to determine a torque reference 21 based on the characteristic (represented for example by signal 17) of the vibration 14 which is suitable for damping the vibration. For this purpose, the arrangement 20 comprises an active vortex-induced vibration damping module 22 which receives the characteristic of the vibration and derives thereupon the counteracting torque reference 21, also denoted as Tref. The active VIV damping module 22 is also referred to as a vibration controller.

The arrangement 20 further comprises an output port 23 for control of the generator 3 based on the torque reference 21. As can be appreciated from the Fig. 1, the vibration controller 22, being part of an outer loop 24, receives the characteristic 17 of the vibration 14 and derives the torque reference 21. The wind turbine 1 is configured to implement an inner loop 25 within the outer loop 24. The inner loop 25 includes to monitor actual currents 26, for example including currents Ia,b,c, i.e., three-phase actual currents of stator windings of the generator 3. Furthermore, the actual currents 26 are provided to a current controller 26 (included in arrangement 2) which also receives or derives internally a current reference based on the torque reference 21. The current controller 26 is then adapted to derive an operational parameter reference 27, in particular a voltage reference V*a,b,c based on the input signals, in particular at least including the actual currents 26 and the torque reference 21.

The operational parameter reference 27 is then supplied to the generator-side converter 8. The generator-side converter 8 then controls not in detail illustrated controllable switches based on the operational parameter reference 27 and controls the generator 3, in order to generate a torque in accordance to the torque reference 21.

Thus, the operational parameter reference 27 is derived based on the torque reference 21 and is also based on the actual torque indicating feedback (represented by the current feedback 26). The controllable switches of the generator-side converter 8 are then operated based on the operational parameter reference 27.

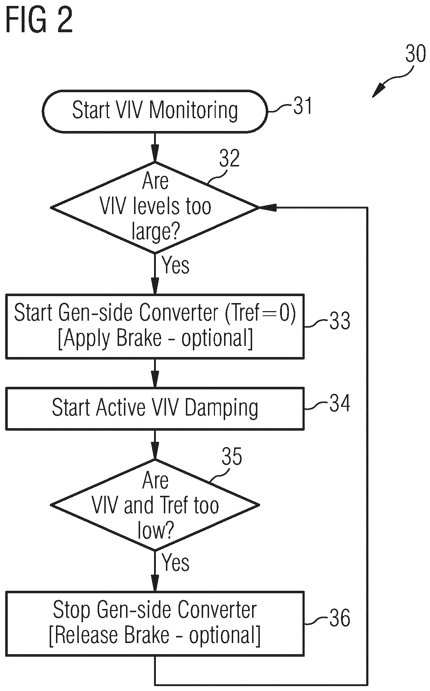

Fig. 2 illustrates a method scheme 30 of a damping method according to an embodiment of the present invention. At a method step 31, monitoring of the rotor blade vibration is started. In a decision block 32 it is determined whether the vibration level or levels are too large. If this is the case, it is branched to the block 33 in which the generator-side converter is started and optionally also a rotor brake may be applied. The method continues to block 34 where the active vibration damping of the rotor blades is started which may involve steps as has been explained with reference to Fig. 1.

In a decision block 35 it is checked whether the vibration level and/or derived torque reference are lower than a threshold. If this is the case, in a block 36 the generator-side converter is stopped and optionally also the rotor brake may be released. The method flow then returns to the decision element 32.

Thus, determining a torque reference and/or generating the torque is performed according to embodiments of the present invention only if the magnitude of the vibration is above a vibration magnitude threshold (compare decision block 32 in Fig. 2).

Embodiments of the present invention may minimize vortex-induced vibrations or other vibrations, in particular edgewise vibration of the rotor blades by means of a damping torque generated by the electrical drive train. The method may in particular being applied when previously the power converter is turned off and the rotor is either for example locked or idling or in one of the operational modes as explained or mentioned above.

If the monitored vibration levels are deemed too large, the turbine controller may request to start the generator-side converter, while the grid-side converter 11 may be kept off. Once the generator-side converter 8 is ready, the turbine controller may demand a torque reference of Tref to reduce or minimize the vibration indicating feedback signal 17. If the vibration level and torque reference are low enough, the turbine controller may request to stop the generator-side converter 8 and monitoring of the vibration level continues.

Optionally, the wind turbine mechanical brake may be applied while the active vibration damping is running, which may be mostly advantageous if the rotor is locked. The flow diagram 30 illustrated in Fig. 2 may include to track the generator torque reference by the converter controller, however, alternative architectures may achieve the same goal.

In the inner loop 25 (sensorless generator control), the current is controlled in a closed loop, requiring measurements of phase currents (Ia,b,c) and estimation of rotor position (for example sensorless) by means of a high frequency signal injection (HFI) observer. Current references (Idq* for conventional vector control) may be calculated from the reference torque Tref based on a model of the generator 3. The generator control may be well suited for zero and very low speed.

The active vibration damping (outer loop 24) may produce a torque reference 21 to reduce or minimize the chosen vibration feedback signal 17 (for example blade moments and/or nacelle acceleration). A simple implementation of the vibration controller 22 may include a proportional resonant controller. By monitoring this feedback signal 17 which characterizes the vibration, the generator generates a torque signal with a suitable frequency corresponding to any edgewise rotor mode that can occur and with the proper phase to counteract the vibrations.

When the blades are pitched to the stop position, the torque signal immediately provokes a blade motion in the flapwise direction. Because of the coupling between flapwise and edgewise motions due to the structural design of the blades, a significant amount of energy brought by the generator torque is also transferred to the edgewise direction. The torque level is adjusted in order to feed enough power to balance the aerodynamic power injected to the structure and consequently dampen the vibrations.

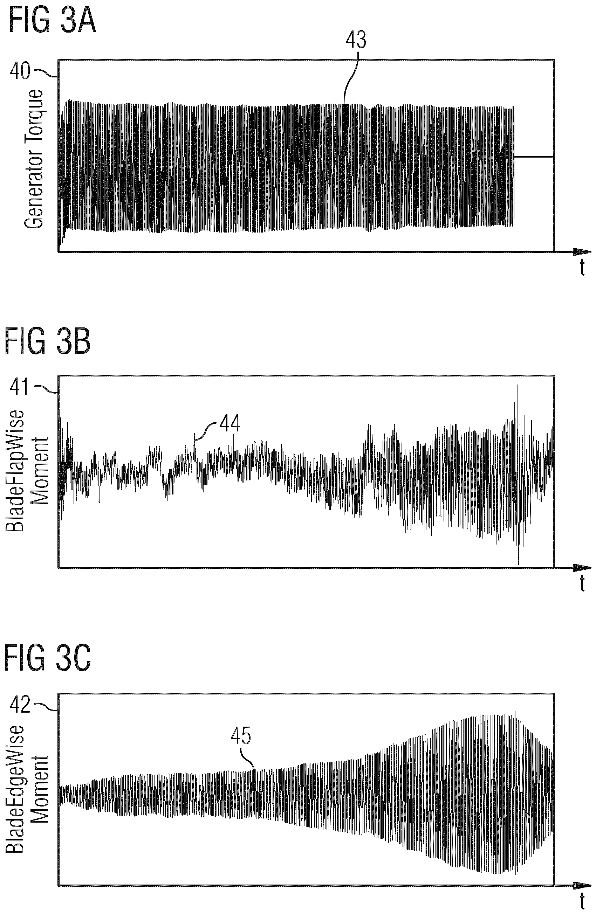

**Figs. 3A****,B,C** illustrate graphs with abscissas indicating the time and ordinate 40 indicating generator torque, ordinate 41 indicating blade flapwise moment and ordinate 42 indicating blade edgewise moment. In Fig. 3A, the curve 43 thus indicates the torque reference (for example torque reference 21 in Fig. 1) based on which the generator 3 is operated. The curve 44 in Fig. 3B indicates the blade flapwise moment which increases over time. The curve 45 in Fig. 3C illustrates the blade edgewise moment which also increases with time. Controlling the generator using the torque reference 43 illustrated in Fig. 3A causes excitation of blade flapwise vibrations as well as blade edgewise vibrations.

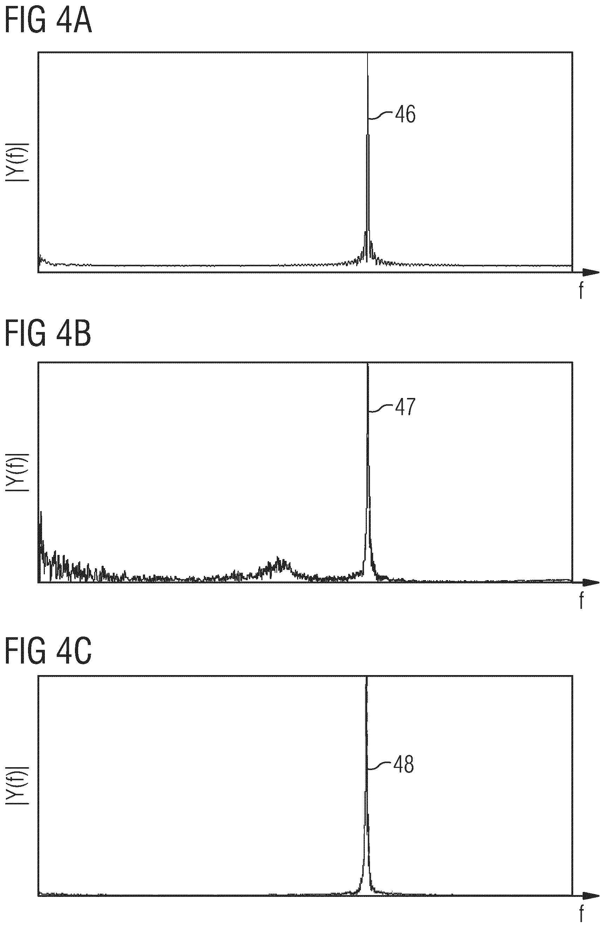

The **Figs. 4A****,B,C** represent Fourier transformations 46, 47, 48 of the signals 43, 44, 45, respectively, of the Figs. 3A,B,C. It is visible from the Figs. 4A,B,C that the torque reference 41 has substantially the same frequency as the frequency components of the flapwise vibration and edgewise vibration.

Thus, embodiments of the present invention may also excite intended or particular vibrations of rotor blades. Conversely, those experimental results also demonstrate that damping of particular vibration modes of rotor blades is possible. A wind turbine was equipped with an unbalanced rotor without having the active damping method applied for obtaining the results illustrated in Figs. 3 and 4. The test was conducted by injecting a torque reference 43 at the frequency of interest to replicate the vortex-induced vibration signatures. Tests showed the capability of a torque signal to interact with rotor vibration modes, indicating that active damping shall be feasible.

Embodiments of the present invention present a method of mitigating vortex-induced vibrations. A low-cost software-based solution is provided if existing sensors can be used as a vibration feedback.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

## Claims

1. Method of damping a vibration (15) of one or more rotor blades (5) of a wind turbine (1), the rotor blades being coupled to a rotor (3a) of a wind turbine generator (3), during an operation mode different from a power production mode, the vibration in particular including an edgewise vibration (14) out of a rotor plane (15), the method comprising:
monitoring a characteristic (17), in particular including magnitude and/or phase and/or frequency, of the vibration (14);
determining a torque reference (21, Tref) based on the characteristic of the vibration which is suitable for damping the vibration;
generating a torque by the generator (3) according to the torque reference (21, Tref).

2. Method according to the preceding claim, wherein determining a torque reference (21, Tref) and/or generating the torque is performed only if the magnitude of the vibration (14), in particular for at least one predetermined frequency, is above a vibration magnitude threshold.

3. Method according to any one of the preceding claims, wherein the generator is electrically connected to a generator-side converter (8), in particular AC/DC converter, including plural controllable switches, for controlling the generator (3), the method comprising:
if the magnitude of the vibration (14) is above the vibration magnitude threshold:
in particular starting the generator-side converter (8) ;
deriving an operational parameter reference (27, V*abc), in particular voltage reference, which is based on the torque reference (Tref) and in particular an actual torque indicating feedback (26, Iabc);
receiving, by the generator-side converter (8), the operational parameter reference (27, V*abc), in particular voltage reference;
operating, by the generator-side converter (8), the controllable switches based on the operational parameter reference (27, V*abc).

4. Method according to any one of the preceding claims, further comprising, in particular as an inner loop (25):
monitoring actual currents (Iabc) of generator windings of the generator (3);
determining a current reference, in particular in a d-q frame, based on the torque reference (21, Tref) and in particular a rotor position;
supplying the monitored actual currents (Iabc), in particular converted to the d-q frame, and the current reference to a current controller (26), in particular in including a proportional and/or integral and/or differential term;
deriving, by the current controller (26), an operational parameter reference (27, V*abc), in particular in an abc-frame, in particular voltage reference;
supplying the operational parameter reference (27, V*abc) to the generator-side converter (8).

5. Method according to any one of the preceding claims, wherein the rotor position is derived sensorless, in particular without using a position sensor, by a high frequency signal injection method.

6. Method according to any one of the preceding claims, further comprising, in particular as an outer loop (24):
receiving, by a vibration controller (22), the characteristic (17) of the vibration (14), in particular a magnitude of the vibration in a predetermined frequency range;
deriving, by the vibration controller (22), the torque reference (21, Tref), in particular including amplitude and/or frequency and/or phase.

7. Method according to any one of the preceding claims, wherein the characteristic (17) of the vibration is monitored using measurement data from at least one blade strain gauge sensor (18) and/or load sensor and/or accelerometer (19) installed at the blade (5) and/or at the generator (3) and/or drive train and/or at a nacelle.

8. Method according to any one of the preceding claims, wherein the operation mode includes that the rotor (3a) is idling and/or locked and/or a brake is applied to the rotor and/or that a rotational speed of the rotor (3a) is less than 0. 1 rpm and/or that a rotor blade mounting or unmounting procedure is performed.

9. Method according to any one of the preceding claims, comprising:
if the magnitude of the of the vibration (14) is at or below the vibration magnitude threshold and/or the torque reference is below a torque threshold:
stopping the generator-side converter (8).

10. Method according to any one of the preceding claims, wherein the generator-side converter (8) is connected to a DC-link (9) which is connected to a grid-side converter (11), the method comprising:
keeping the grid side converter (11) turned off.

11. Method according to any one of the preceding claims, wherein at least one of the following is satisfied:
the blade (5) is pitched to substantially 90° or a feather position or a stop position or an idling position;
the vibration (14) is at least vortex induced;
the vibration (14) includes one or more edgewise rotor vibration modes, in particular having frequency between 0.1 Hz and 5 Hz.

12. Method according to any one of the preceding claims, wherein the generator (3) is or comprises a permanent magnet synchronous generator, in particular having an outer rotor (3a) .

13. Arrangement (2) for damping a vibration (14) of one or more rotor blades (5) of a wind turbine (1), the rotor blades being coupled to a rotor (3a) of a wind turbine generator (3), during an operation mode different from a power production mode, the vibration in particular including an edgewise vibration (14) out of a rotor plane (15), the arrangement comprising:
an input port (16) for receiving a signal (17) indicating a characteristic, in particular including magnitude and/or phase and/or frequency, of the vibration (14) ;
a processor (20, 22) adapted to determine a torque reference (21, Tref) based on the characteristic (17) of the vibration (14) which is suitable for damping the vibration;
an output port (23) for controlling the generator (3) based on the torque reference (21, Treef).

14. Arrangement according to the preceding claim, which is adapted to carry out or control a method according to any one of claims 1 to 12.

15. Wind turbine (1), including:
an arrangement (2) according to any one of the claims 13 or 14;
a generator (3) for generating a torque according to the torque reference;
at least a generator-side converter (8) electrically connected to the generator, the arrangement being connected to control the generator-side converter;
at least one rotor blade (5) coupled to the rotor (3a) of the generator (3).
